## Europäisches Patentamt

## European Patent Office

## Office européen des brevets

(11) Numéro de publication : **0 018 868**
**B1**

(12) **FASCICULE DE BREVET EUROPÉEN**

(45) Date de publication du fascicule du brevet :
**22.06.83**

(51) Int. Cl.³ : **B 23 K 7/10**

(21) Numéro de dépôt : **80400471.1**

(22) Date de dépôt : **09.04.80**

---

(54) **Machine pour le refendage de brames par oxycoupage.**

---

(30) Priorité : **27.04.79 FR 7910906**

(43) Date de publication de la demande :
**12.11.80 Bulletin 80/23**

(45) Mention de la délivrance du brevet :
**22.06.83 Bulletin 83/25**

(84) Etats contractants désignés :
**DE GB SE**

(56) Documents cités :
**DE C 642 217**
**FR A 2 240 779**
**US A 1 718 192**
**US A 2 015 329**
**US A 2 429 686**
**US A 2 809 824**
**US A 3 001 680**

**Le dossier contient des informations techniques présentées postérieurement au dépôt de la demande et ne figurant pas dans le présent fascicule.**

(73) Titulaire : **UNION SIDERURGIQUE DU NORD ET DE L'EST DE LA FRANCE par abréviation "USINOR"**
**La Défense 9, 4, place de la Pyramide**
**F-92800 Puteaux (FR)**

(72) Inventeur : **Pawlowski, Jean**
**31, Pont de Steendam**
**F-59210 Coudekerque Branche (FR)**

(74) Mandataire : **Moncheny, Michel et al**
**c/o Cabinet Lavoix 2 Place d'Estienne d'Orves**
**F-75441 Paris Cedex 09 (FR)**

---

Jouve, 18, rue St-Denis, 75001 Paris, France

## Machine pour le refendage de brames par oxycoupage

La présente invention est relative au refendage des brames par oxycoupage.

En général, les machines d'oxycoupage destinées à effectuer des coupes droites se composent d'un banc portant directement les chalumeaux, et se déplaçant sur un chemin de roulement rectiligne suivant la direction de coupe de la brame.

Lorsqu'on utilise une telle machine pour le découpage de brames en blooms, dont la section est faible par rapport à leur longueur, on constate un cintrage des blooms de rive. Ce défaut est une conséquence du phénomène de retrait de coupe, bien connu des chaudronniers. En se déformant, il arrive alors que le bloom de rive, prenant appui sur le support de la brame, provoque un déplacement de celle-ci, ce qui entraîne un déport relatif de la trajectoire de coupe dont l'effet est de rendre les blooms de rive impropres à un traitement subséquent, par exemple dans un train poutrelles.

On pourrait envisager un blocage physique de la brame dans une sorte d'étau, mais en fonction des dimensions des blooms, les efforts en jeu pourraient atteindre des valeurs tellement importantes que ce blocage n'est pas réalisable en pratique.

Le but de l'invention est de réaliser une machine de refendage de brames par oxycoupage, qui soit capable de débiter, y compris sur les deux rives, des blooms présentant des caractéristiques satisfaisantes en ce qui concerne leur profil longitudinal et leur section.

A cet effet, l'invention a pour objet une machine pour le refendage d'une brame reposant librement à plat sur un support fixe, au moyen de chalumeaux d'oxycoupage portés par un banc mobile en translation suivant la direction de coupe de la brame, caractérisée en ce que les chalumeaux sont montés sur un chariot libre en translation sur un chemin de roulement porté par le banc et perpendiculaire à la direction d'avance de ce dernier, en ce qu'il est prévu des moyens d'autocentrage comprenant deux palpeurs portés par le chariot et coopérant avec les flancs respectifs de la brame, et un dispositif pour déplacer les deux palpeurs symétriquement par rapport à un plan vertical de référence lié au chariot et parallèle à la direction du refendage, et maintenir ce plan de référence confondu avec le plan de symétrie de la brame au droit des chalumeaux.

De préférence ce plan de référence est lui-même un plan de symétrie pour le chariot.

Grâce à un tel agencement, toute variation, soit de la largeur de la brame, soit de sa position, se traduit par une modification de la position des palpeurs et par suite du chariot, jusqu'à ce que la coïncidence des deux plan de symétrie soit obtenue. Il en résulte que le groupe de chalumeaux, dont les becs sont situés sensiblement sur la droite joignant les palpeurs, suit l'axe réel de la brame. Les variations de largeur de la brame sont réparties par moitié entre les deux blooms extrêmes, ce qui est parfaitement acceptable.

Dans le brevet US-A-3 001 680, est décrit un dispositif d'auto-centrage d'une bande en tôle mince, de largeur constante, défilant au droit d'un dispositif de refendage fixe. L'auto-centrage est obtenu par l'intermédiaire de galets palpeurs appliqués au contact des rives de la bande et portés par des bras qui, étant articulés autour d'un axe vertical commun et fixe, n'ont pas de façon permanente une position symétrique par rapport à l'axe longitudinal de référence du système.

Suivant une disposition préférée, les palpeurs, constitués par des patins en contact roulant ou frottant avec les flancs de brame, sont articulés respectivement sur deux bras d'égale longueur, montés oscillants sur le chariot en des points symétriques par rapport au plan de référence, ces deux bras étant reliés entre eux par une chaîne cinématique, destinée à assurer leur maintien dans une position relative symétrique, comprenant un engrenage à deux roues dentées de même diamètre, qui sont solidaires des axes de montage respectivement de l'un des bras et d'un levier d'inversion relié à l'autre bras par une bielle d'accouplement dont les articulations définissent, avec les axes de montage du levier et de l'autre bras, un parallélogramme articulé. Les deux patins sont appuyés sur les flancs de la brame par un vérin pneumatique, articulé sur le chariot, dont l'élément mobile est articulé sur le levier d'inversion, et qui, pour permettre l'écartement des bras dans les positions extrêmes du banc, est à double effet.

Pour rendre inopérants les moyens d'autocentrage au début et à la fin d'une course de refendage, c'est-à-dire lorsque les patins palpeurs n'ont pas un contact total avec les flancs de la brame, le banc comporte des moyens de blocage du chariot, qui comprennent un frein susceptible d'être commandé soit manuellement, soit automatiquement, sous l'effet d'un interrupteur soumis à l'action d'un palpeur secondaire porté par le patin et ayant normalement, avec le flanc de brame associé, une position de contact frottant à laquelle correspond un desserrage du frein, et agencé pour déclencher le serrage du frein dès que cesse ce contact.

L'invention sera explicitée de façon purement indicative au cours de la description qui va suivre, en référence aux dessins annexés, dans lesquels :

la figure 1 en vue de face, en élévation, d'une machine de refendage de brame qui représente également, en coupe, l'infrastructure supportant la machine ;

la figure 2 est une vue en plan correspondante ;

la figure 3 est une vue en coupe suivant la ligne 3-3 de la figure 1 ;

les figures 4 et 5 sont des vues, à plus grande échelle, représentant l'un des patins palpeurs.

La machine 1, qui porte trois chalumeaux d'oxycoupage 2, 3, 4, orientés verticalement vers le bas pour le refendage d'une brame A en quatre blooms a, b, c, d, est supportée par une infrastructure en béton 6 qui comporte deux parois verticales parallèles 7, à la partie supérieure desquelles sont fixés deux rails 8. Entre les parois 7 est construite, en partie basse, une fosse 9 remplie d'eau que surmontent des poutrelles transversales espacées 11 reposant sur des appuis 12. Chaque poutrelle 11 porte un bloc 13 en forme de peigne parallélépipédique, comportant des encoches 14 ouvertes vers le haut, au droit de certaines desquelles sont situés les chalumeaux d'oxycoupage 2 à 4 qui attaquent la brame A reposant librement, à plat, sur le support constitué par l'ensemble des blocs 13 espacés longitudinalement.

La machine 1 comporte un banc 16 mobile en translation longitudinale qui, en plan, a la forme d'un U dont les ailes 17 sont munies, à leur partie inférieure, de galets 18, 19, à axe horizontal, appuyés sur les rails 8. En outre, pour le guidage transversal du banc des galets 21, à axe vertical, enserrent le rail 8 de l'une des rives. Les deux ailes 17 du banc 16 sont réunies à l'avant par une poutre droite 23, formant pont roulant, qui comporte quatre faces de structure en treillis délimitées par des profilés en caisson 24. Pour l'entraînement du banc 16, un arbre 26 traversant la poutre 23 et relié aux galets avant 19 peut être couplé sélectivement avec deux moteurs 27, 28 à vitesse différente, permettant une marche lente dans le sens de la coupe et une marche rapide pour la course de retour. La flèche f désigne le sens de la coupe.

Les chalumeaux 2 à 4 sont montés, non pas directement sur la poutre droite 23 du banc 16, mais sur un chariot 29 mobile en translation transversale le long de la poutre 23 et dont l'ossature est constituée par une charpente en caisson rectangulaire enveloppant la poutre 23 et comportant des faces 31 à 34 de structure en treillis. La face supérieure 31 est munie de deux paires de galets obliques 36 guidés sur les ailes d'une cornière 37 soudée sur la face supérieure de la poutre 23, et de galets 38 à axe horizontal qui roulent sur un rail 39 fixé lui aussi sur la face supérieure de la poutre. Un guidage complémentaire est assuré par des galets 41 à axe horizontal, portés par la face verticale avant 32 du chariot et qui ont un contact de roulement avec le dessous de l'aile horizontale d'une cornière 42 soudée sur le profilé adjacent 24 de la poutre 23.

Chaque chalumeau 2, 3, 4 est fixé, en position verticale, dans une chape 43 dont les branches sont reliées par des biellettes 44, 46 formant un parallélogramme articulé dont deux côtés sont verticaux, à l'extrémité avant 45 d'un bras-support 47 fixé à la partie inférieure du chariot en une position qui peut être réglée dans la direction de translation de ce dernier. A cet effet l'extrémité arrière du bras 47 peut coulisser dans une glissière 48 adjacente à la face inférieure 33 du chariot, tandis que sur l'extrémité avant 45 sont montés deux galets 49 à axe horizontal guidés le long de l'arête du bord coudé vers le haut 51 de l'aile horizontale d'une cornière 52, dont l'aile verticale est soudée dans la face avant 32 du chariot. Le bras-support 47 peut être bloqué au moyen d'une ou plusieurs vis 53 portées par l'extrémité avant 45 du bras et engagées au contact de l'aile horizontale de la cornière 52.

Chaque chalumeau est maintenu à la distance voulue de la brame A par une pièce d'appui 55 en forme de compas ouvert vers le bas, dont la région de sommet est traversée par les axes 54, 56 reliant les biellettes 44, 46 à la chape 43, et dont les branches portent à leur extrémité un galet 58 roulant au contact de la face supérieure de la brame.

Les biellettes supérieures 44 sont prolongées vers l'arrière, au-delà de l'axe d'articulation 59, en formant un bras de levier 61 sur lequel peut être exercée une pression vers le bas, pour le relevage des chalumeaux, sous l'effet d'un rouleau 62 s'étendant sur toute la longueur de la poutre 23, relié par des bras 63 à des articulations 64 portées par le profilé inférieur avant de la poutre 23, et par des pattes 66 aux articulations d'extrémité des tiges 67 de vérins dont le corps 68 est articulé sur une ferrure 69 fixée sur la face supérieure de la poutre 23. La mise en extension des vérins 68 assure le relevage des chalumeaux.

Le chariot 29 a un plan vertical de symétrie XX dans lequel se trouve le chalumeau central 3. Les autres chalumeaux 2, 4 sont espacés du chalumeau central d'une distance égale au quart de la largeur nominale de la brame. Les deux blooms médians b, c ont donc une largeur constante. Toutefois, en raison des variations de la largeur réelle de la brame, la largeur des blooms de rive a, d ne peut pas être constante. Pour que ces variations soient réparties par moitié sur ces blooms de rive et pour que tout déplacement de la brame sur son support n'ait pas de conséquence néfaste, la machine de refendage suivant l'invention comporte des moyens d'autocentrage dont le but est de faire coïncider à tout instant, pendant l'avance du banc 16 et grâce à la liberté de déplacement transversal du chariot, le plan de symétrie X-X du chariot avec le plan de symétrie YY de la brame A au droit des chalumeaux 2, 3, 4.

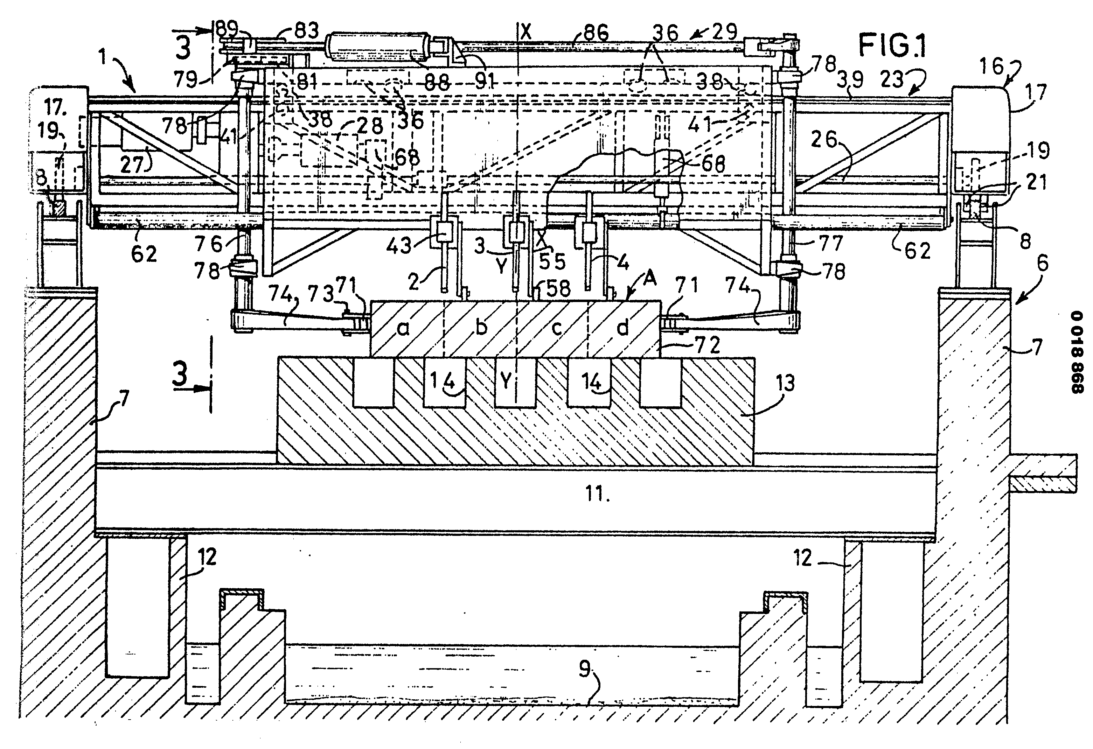

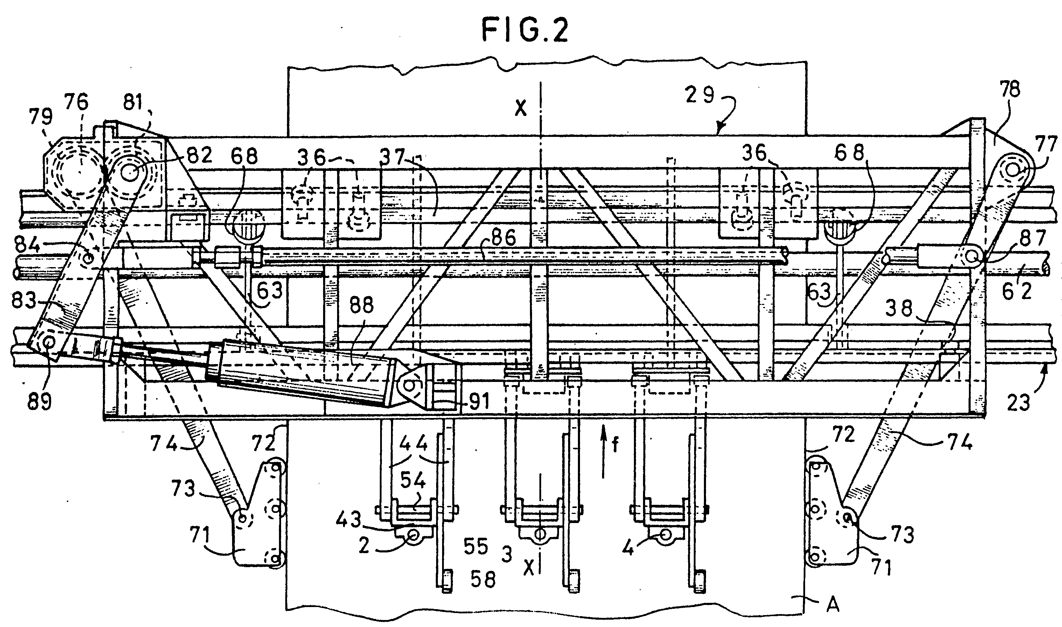

A cet effet deux patins palpeurs 71, portés par le chariot 29 et disposés symétriquement, ont un contact roulant avec les flancs 72 respectifs de la brame et sont articulés, en 73, sur l'extrémité correspondante de deux bras 74, d'égale longueur, montés oscillants sur le chariot au moyen d'axes verticaux 76, 77 et ayant entre eux une liaison cinématique assurant leur maintien dans une position relative symétrique par rapport au plan vertical XX. Chaque axe vertical 76 ou 77 tourillonne dans deux ferrures 78 fixées à l'extrémité correspondante du charriot et se prolonge vers le haut, au-dessus de la charpente du chariot. Sur le prolongement de l'un des axes, 76, situé à gauche aux figures 1 et 2, est fixée une roue dentée 79 qui est en prise avec une roue dentée 81, de même diamètre, fixée sur un axe 82 aligné transversalement avec l'axe 76 et solidarisé avec l'une des extrémités d'un levier d'inversion 83 qui, avec la direction d'avance, fait un angle égal à celui du bras 74 adjacent, mais de sens contraire. A mi-longueur de ce levier est articulée, par un axe 84, l'une des extrémités d'une bielle d'accouplement 86 dont l'autre extrémité est articulée sur l'autre bras oscillant 74 au moyen d'un axe 87 dont la position est telle que les axes 82, 84, 77, 87 définissent un parallélogramme articulé. La barre d'accouplement 86 est donc parallèle à la direction de translation du chariot et les deux bras 74 restent symétriques par rapport au plan XX.

Un contact serré des patins 71 avec les flancs de brame 72 est assuré au moyen d'un vérin pneumatique à double effet 88 monté entre l'extrémité 89 du levier 83, qui est opposée à l'axe 82, et une ferrure 91 fixée sur le dessus du chariot.

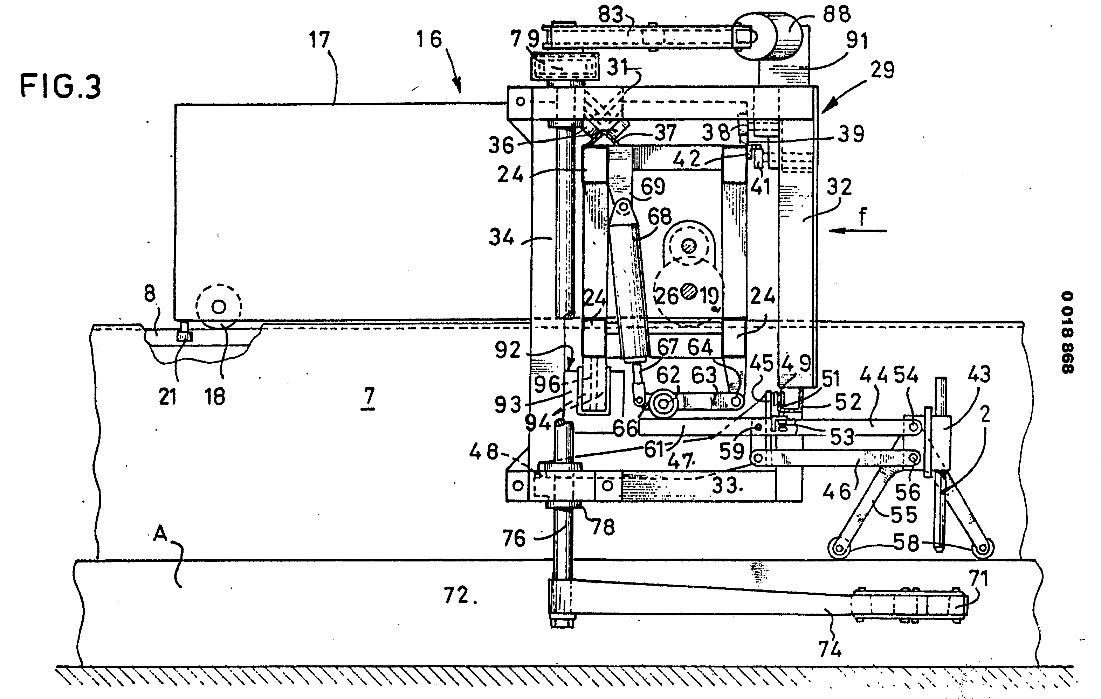

Aux extrémités d'une course de travail du banc 16 les patins palpeurs 71 peuvent ne pas avoir tous deux un contact franc avec les flancs 72 de la brame. Il convient alors de rendre le chariot 29 insensible à l'action des moyens d'autocentrage. C'est la raison pour laquelle est prévu un frein 92, représenté schématiquement à la figure 3. Ce frein comporte un étrier 93, fixé sur la face 34 du chariot 29, entre les branches duquel des mâchoires 94 peuvent être déplacées, sous l'effet d'une commande électrohydraulique par exemple, pour serrer une lame verticale 96 solidaire du profilé inférieur arrière 24 de la poutre 23 du banc 16. Le frein 92 peut être actionné manuellement ou de façon automatique en fonction de la position qu'occupent longitudinalement les patins 71 par rapport aux extrémités de la brame.

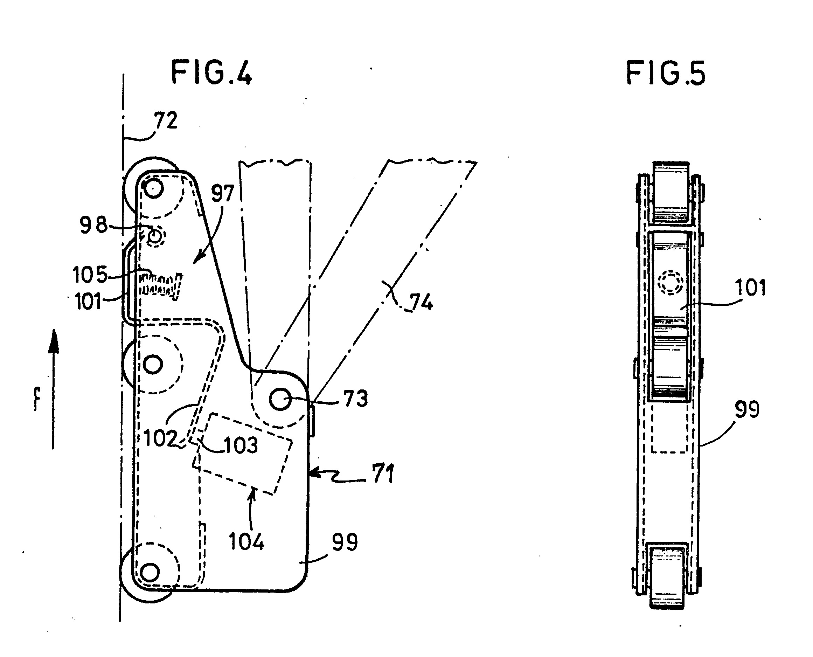

Pour cet actionnement automatique chaque patin 71 est muni (fig. 4) d'un palpeur secondaire 97 comprenant une lame pliée dont une extrémité est articulée sur un axe 98 porté par les flasques 99 du patin et dont une portion droite 101 forme un frotteur appuyé par un ressort 105 au contact du flanc de brame 72, dans une position où la portion terminale 102, opposée à l'axe 98, maintient enfoncée une touche 103 d'un interrupteur 104, en assurant ainsi le desserrage du frein 92 et la liberté de mouvement du chariot. Lorsque le contact de frottement du palpeur 97 cesse, le ressort 105 fait pivoter le palpeur en libérant la touche 103 qui modifie l'état du circuit associé en provoquant le serrage du frein et le blocage du chariot.

De préférence l'interrupteur 104 commande non seulement le circuit de freinage mais aussi le circuit d'alimentation du vérin pneumatique 88, de telle sorte que lorsque la touche 103 est enfoncée les patins 71 soient appuyés sur les flancs de brame 72 et que lorsque après rupture du contact frottant la touche prend son autre position l'alimentation du vérin soit inversée et les bras 74 écartés.

En fin de coupe, dès que l'un des deux palpeurs 97 détecte l'extrémité de la brame, le serrage du frein qui se produit alors empêche toute réaction non contrôlée du système et la dizaine de centimètres restants sera coupée dans de bonnes conditions, sans que l'opérateur ait à intervenir. On pourrait d'ailleurs prévoir un automatisme qui, après temporisation suffisante, commanderait l'arrêt de la machine.

Au commencement d'une coupe les bras 74 sont ouverts et le frein de chariot 92 serré. L'opérateur amène la machine au début de la brame, il commande le desserrage du frein et la fermeture des bras par le vérin 88 en assurant ainsi le centrage du chariot. Après avoir bloqué le chariot au moyen du frein 92 et écarté les bras 74, il fait reculer la machine pour venir en position d'amorçage. Pendant le commencement de la coupe le chariot conserve sa position initiale et dès que la coupe est parvenue au point où la brame se retrouve dans le champ d'action des patins, l'opérateur passe en position « automatique » en activant les moyens d'autocentrage ; les bras se ferment et, lorsque les palpeurs secondaires 97 détectent l'un et l'autre la présence de la brame, le frein de chariot se desserre et le processus normal est engagé.

Les crasses d'oxycoupage, qui dans l'eau de la fosse 9 se transforment en granulés, sont reprises périodiquement par un racleur, non représenté, pour être rassemblées puis évacuées par une benne preneuse.

## Revendications

1. Machine pour le refendage d'une brame (A) reposant librement à plat sur un support fixe (13), au moyen de chalumeaux d'oxycoupage (2, 3, 4) portés par un banc (16) mobile en translation suivant la direction de coupe de la brame, caractérisée en ce que les chalumeaux sont montés sur un chariot (29) libre en translation sur un chemin de roulement (39) porté par le banc et perpendiculaire à la direction d'avance (F) de ce dernier, en ce qu'il est prévu des moyens d'autocentrage comprenant deux palpeurs (71) portés par le chariot (29) et coopérant avec les flancs (72) respectifs de la brame, et un dispositif pour déplacer les deux palpeurs symétriquement par rapport à un plan vertical de référence (XX) lié au chariot et parallèle à la direction du refendage, et maintenir ce plan de référence confondu avec le plan de symétrie (YY) de la brame (A) au droit des chalumeaux (2, 3, 4).

2. Machine suivant la revendication 1, caractérisée en ce que le plan vertical (X-X) de référence est un plan de symétrie du chariot.

3. Machine suivant l'une des revendications 1 et 2, caractérisée en ce que les deux palpeurs (71) sont disposés au droit des becs de chalumeau (2, 3, 4).

4. Machine suivant l'une des revendications 1 à 3, caractérisée en ce que les palpeurs (71) respectifs sont articulés sur deux bras (74) d'égale longueur, montés oscillants sur le chariot en des points symétriques (76, 77) par rapport au plan de référence, ces deux bras ayant entre eux une liaison cinématique assurant leur maintien dans une position relative symétrique par rapport au plan vertical de référence.

5. Machine suivant l'une des revendications 1 à 4, caractérisée en ce que les palpeurs (71) sont des patins en contact glissant avec les flancs (72) de la brame (A).

6. Machine suivant l'une des revendications 1 à 4, caractérisée en ce que les palpeurs (71) sont des patins en contact roulant avec les flancs (72) de la brame (A).

7. Machine suivant l'une des revendications 1 à 6, caractérisée en ce que, pour appuyer les palpeurs au contact des flancs de la brame, des moyens élastiques, constitués par un vérin pneumatique (88), sont prévus.

8. Machine suivant la revendication 4, caractérisée en ce que les deux bras (74) oscillants sont reliés entre eux par une chaîne cinématique comprenant un engrenage à deux roues dentées (79, 81) de même diamètre, qui sont solidaires des axes de montage (76, 82) respectivement de l'un des bras et d'un levier d'inversion (83) relié à l'autre bras par une bielle (86) d'accouplement dont les articulations (84, 87) définissent, avec les axes de montage du levier (82) et de l'autre bras (77), un parallélogramme articulé.

9. Machine suivant les revendications 7 et 8, caractérisée en ce que sur le chariot (29) est monté un vérin pneumatique (88) dont l'élément mobile sollicite normalement le levier d'inversion dans le sens qui appuie les deux palpeurs (71) au contact des flancs (72) de la brame (A).

10. Machine suivant la revendication 9, caractérisée en ce que, pour permettre l'écartement des bras, le vérin pneumatique (88) est à double effet.

11. Machine suivant l'une des revendications 1 à 10, caractérisée en ce que le banc (16) comporte des moyens (92) de blocage du chariot pour rendre inopérants les moyens d'autocentrage.

12. Machine suivant la revendication 11, caractérisée en ce que les moyens de blocage comprennent un frein (92) qui peut être commandé manuellement.

13. Machine suivant la revendication 12, caractérisée en ce que chaque palpeur (71) comporte un palpeur secondaire (97) normalement en contact avec le flanc (72) de brame (A) correspondant, et qui provoque automatiquement le serrage du frein (92) dès que cesse le contact avec la brame, à la fin d'une course de refendage.

14. Machine suivant la revendication 13, caractérisée en ce que le serrage du frein est commandé par un interrupteur (104) associé au palpeur secondaire (97).

15. Machine suivant l'une des revendications 1 à 14, caractérisée en ce que le support (13) de brame comporte plusieurs éléments transversaux espacés longitudinalement, en forme de peigne, dans lesquels sont formées, dans les zones de passage des chalumeaux, des encoches (14) ouvertes vers le haut.

16. Machine suivant l'une des revendications 1 à 15, caractérisée en ce que le chariot (29) se déplace au-dessus d'une fosse (9) remplie d'eau, qui reçoit les crasses d'oxycoupage.

17. Machine suivant l'une des revendications 1 à 16, caractérisée en ce que la charpente du chariot, dont la section a une forme générale en caisson, entoure la partie transversale du banc et comporte des galets (36) guidés par des rails (37) situés à la partie haute du banc (16).

18. Machine suivant l'une des revendications 1 à 17, caractérisée en ce que les moyens d'entraînement (26, 19) en translation du banc peuvent être couplés sélectivement avec deux moteurs (27, 28) à vitesse différente.

19. Machine suivant l'une des revendications 1 à 18, caractérisée en ce que chaque chalumeau (2, 3, 4) est supporté en position verticale dans une chape (43) reliée par des biellettes (44, 46) formant un parallèlogramme articulé sur un bras-support (47) du chariot, qui peut être fixé dans une position réglable le long du chariot (29).

20. Machine suivant la revendication 19, caractérisée en ce que la position de travail, par rapport à la brame (A), de chaque chalumeau est définie par une pièce d'appui (55) solidaire de la chape (43).

21. Machine suivant la revendication 19 ou 20, caractérisée en ce que les chalumeaux (2, 3, 4) peuvent être relevés au moyen d'au moins un vérin (68) articulé sur le banc (16) dont la partie mobile (67) est reliée à une extrémité (66) d'une barre transversale (63) dont l'autre extrémité est reliée au banc (16), cette barre transversale (63) supportant un rouleau (62) qui agit sur un prolongement (61), formant bras de levier, des biellettes supérieures (44).

## Claims

1. A machine for splitting a slab (A) bearing freely flat on a fixed support (13), by means of oxygen-cutting blow-pipes (2, 3, 4) carried by a bench (16) which is movable in translation in a direction corresponding to the direction in which the slab is cut, characterised in that the blow-pipes are mounted on a carriage (29) which is free to move in translation on a runway (39) carried by the bench and extending in a direction perpendicular to the direction of advance (f) of the bench, self-centering means being provided which comprise two sensors (71) carried by the carriage (29) and cooperating with the respective sides (72) of the slab, and a device is provided for displacing the two sensors symmetrically relative to a vertical reference plane (XX) related to the carriage and parallel to the direction of the cutting, and maintaining said reference plane in coincidence with the plane of symmetry (YY) of the slab (A) in the region of the blow-pipes (2, 3, 4).

2. A machine according to claim 1, characterized in that the vertical plane of reference (XX) is a plane of symmetry of the carriage.

3. A machine according to claim 1 or 2, characterised in that the two sensors (71) are disposed in the region of the nozzles of the blow-pipes (2, 3, 4).

4. A machine according to one of the claims 1 to 3, characterised in that the sensors (71) are respectively pivotally mounted on two arms (74) of equal length which are pivotally mounted on the carriage at symmetrical points (76, 77) relative to the reference plane, these two arms having a kinematic connection therebetween ensuring that they are maintained in a relative position symmetrical with respect to the vertical plane of reference.

5. A machine according to one of the claims 1 to 4, characterised in that the sensors (71) are runners in sliding contact with the sides (72) of the slab (A).

6. A machine according to one of the claims 1 to 4, characterised in that the sensors (71) are runners in rolling contact with the sides (72) of the slab (A) ;

7. A machine according to one of the claims 1 to 6, characterised in that elastically yieldable means, constituted by a pneumatic cylinder device (88) are provided for urging the sensors into contact with the sides of the slab.

8. A machine according to claim 4, characterised in that the two pivotal arms (74) are interconnected by a kinematic chain comprising a gear system having two gear wheels (79, 81) of the same diameter which are rigid with shafts (76, 82) respectively for mounting one of the arms and a reversing lever (83) connected to the other arm by a link (86) whose pivotal connections (84, 87) define, with the shafts mounting the lever (82) and the other arm (77), an articulated parallelogram.

9. A machine according to claims 7 and 8, characterised in that there is mounted on the carriage (29) a pneumatic cylinder device (88) whose movable element normally biases the reversing lever in the direction which applies the two sensors (71) into contact with the sides (72) of the slab (A).

10. A machine according to claim 9, characterised in that the pneumatic cylinder device (88) is double-acting so as to permit the arms to spread apart.

11. A machine according to one of the claims 1 to 10, characterised in that the bench (16) comprises means (92) for locking the carriage so as to render the self-centering means inoperative.

12. A machine according to claim 11, characterised in that the locking means comprise a brake (92) which may be manually controlled.

13. A machine according to claim 12, characterised in that each sensor (71) comprises a secondary sensor (97) which is normally in contact with the corresponding side (72) of the slab (A), which secondary sensor automatically applies the brake (92) as soon as contact with the slab ceases at the end of a splitting travel.

14. A machine according to claim 13, characterised in that the brake is controlled by a switch (104) associated with the secondary sensor (97).

15. A machine according to one of the claims 1 to 14, characterised in that the slab support (13) comprises a plurality of longitudinally spaced-apart transverse elements in the shape of a comb, in which upwardly open recesses (14) are formed in zones in which the blow-pipes pass.

16. A machine according to one of the claims 1 to 15, characterised in that the carriage (29) travels above a pit (9) filled with water which receives the oxygen-cutting clinkers.

17. A machine according to one of the claims 1 to 16, characterised in that the framework of the carriage, whose section has the general shape of a box, surrounds the transverse part of the bench and include rollers (36) guided by rails (37) located in the upper part of the bench (16).

18. A machine according to one of the claims 1 to 17, characterised in that the means (26, 19) for driving the bench in translation may be selectively coupled with two motors (27, 28) having different speeds.

19. A machine according to one of the claims 1 to 18, characterised in that each blow-pipe (2, 3, 4) is supported in a vertical position in a mount (43) connected by links (44, 46) forming an articulated parallelogram structure articulated to a support arm (47) of the carriage which may be fixed in an adjustable position along the carriage (29).

20. A machine according to claim 19, characterised in that the working position, relative to the slab (A), of each blow-pipe is defined by a bearing member (55) rigid with the mount (43).

21. A machine according to claim 19 or 20, characterised in that the blow-pipes (2, 3, 4) may be raised by means of at least one cylinder device (68) pivotally mounted on the bench (16), the moving part (67) of which cylinder device being connected to one end (66) of a transverse bar (63) whose other end is connected to the bench (16), this transverse bar (63) carrying a roller (62) which acts on an extension (61), forming a lever arm, of the upper links (44).

**Ansprüche**

1. Maschine zum Längsdurchtrennen einer frei, eben, auf einem festen Auflager (13) ruhenden Bramme (A) mit Hilfe von Schneidbrennern (2, 3, 4), die von einer translatorisch in Schneidrichtung der Bramme beweglichen Bank (16) getragen werden, dadurch gekennzeichnet, daß die Brenner auf einem translatorisch frei auf einem Laufbahn (39) beweglichen Schlitten (29) angebracht ist, der durch die Bank und senkrecht zur Vorschubrichtung (f) des letzteren gestützt ist, und daß automatische Zentrierungsmittel vorgesehen sind, die zwei vom Schlitten (29) getragene und mit den zugeordneten Flanken (72) der Bramme zusammenarbeitende Tastköpfe (71) und eine Einrichtung zum symmetrischen Verschieben der beiden Tastköpfe bezüglich einer vertikalen Bezugsebene (XX) aufweisen, die mit dem Schlitten verbunden und parallel zur Längs-durchtrennrichtung ist, sowie zum Aufrecht-erhalten der Bezugsebene in Vereinigung mit der Symmetrieebene (YY) der Bramme (A) senkrecht zu den Brennern (2, 3, 4).

2. Maschine nach Anspruch 1, dadurch gekennzeichnet, daß die vertikale Bezugsebene (XX) eine Symmetrieebene des Schlittens ist.

3. Maschine nach einem der Ansprüche 1 und 2, dadurch gekennzeichnet, daß die beiden Tastköpfe (71) senkrecht zu den Mündungen der Brenner (2, 3, 4) angeordnet sind.

4. Maschine nach einem der Ansprüche 1 bis 3, dadurch gekennzeichnet, daß die jeweiligen Tastköpfe (71) gelenkig auf zwei Armen (74) mit gleicher Länge angebracht sind, die an symmetrischen Punkten (76, 77), bezogen auf die Bezugsebene auf dem Schlitten schwenkbar angebracht sind, und daß die beiden Arme eine kinematische Verbindung untereinander haben, die sie in einer symmetrischen Relativstellung bezüglich der vertikalen Bezugsebene sicher hält.

5. Maschine nach einem der Ansprüche 1 bis 4, dadurch gekennzeichnet, daß die Tastköpfe (71) Schuhe sind, die in Gleitkontakt mit den Flanken (72) der Bramme (A) sind.

6. Maschine nach einem der Ansprüche 1 bis 4, dadurch gekennzeichnet, daß die Tastköpfe (71) Schuhe sind, die in Rollberührung mit den Flanken (72) der Bramme (A) sind.

7. Maschine nach einem der Ansprüche 1 bis 6, dadurch gekennzeichnet, daß zum Anlegen der Tastköpfe in Berührung mit den Flanken der Bramme elastische Mittel vorgesehen sind, die von einem Pneumatikzylinder (88) gebildet werden.

8. Maschine nach Anspruch 4, dadurch gekennzeichnet, daß die beiden Schwenkarme (74) untereinander durch eine kinematische Kette verbunden sind, die ein Getriebe mit zwei Zahnrädern (79, 81) von gleichem Durchmesser aufweist, die jeweils fest mit den Lagerachsen (76, 82) eines der Arme und eines Umsteuerhebels (83) verbunden sind, der mit dem anderen Arm über eine Kuppelstange (86) verbunden ist, dessen Gelenkverbindungen (84, 87) mit den Lagerachsen des Hebels (82) und des anderen Arms (77) ein Gelenkparallelogramm bilden.

9. Maschine nach Anspruch 7 und 8, dadurch gekennzeichnet, daß der Schlitten (29) mit einem Pneumatikzylinder (88) versehen ist, dessen be-wegliches Element normalerweise den Umsteuer-hebel in dem Sinn beaufschlagt, daß die beiden Tastköpfe (71) in Anlageberührung mit den Flanken (72) der Bramme (A) sind.

10. Maschine nach Anspruch 9, dadurch gekennzeichnet, daß zur Ermöglichung eines Abstandes zwischen den Armen der Pneumatikzylinder (88) doppelt wirkend ist.

11. Maschine nach einem der Ansprüche 1 bis 10, dadurch gekennzeichnet, daß die Bank (16) Mittel (92) zum Sperren des Schlittens aufweist, um die automatischen Zentrierungsmittel unwirksam zu machen.

12. Maschine nach Anspruch 11, dadurch gekennzeichnet, daß die Sperrmittel eine Bremse (92) aufweisen, die manuell steuerbar ist.

13. Maschine nach Anspruch 12, dadurch gekennzeichnet, daß jeder Tastkopf (71) einen zweiten Tastkopf (97) aufweist, der normalerweise in Berührung mit der Flanke (72) der zugeordneten Bramme (A) ist und der automatisch das Anziehen der Bremse (92) am Ende eines Längsdurchtrennweges bewirkt, sobald der Kontakt mit der Bramme nicht mehr vorhanden ist.

14. Maschine nach Anspruch 13, dadurch gekennzeichnet, daß das Anziehen der Bremse durch einen Unterbrecher (104) gesteuert wird, der mit dem zweiten Tastkopf (97) verbunden ist.

15. Maschine nach einem der Ansprüche 1 bis 14, dadurch gekennzeichnet, daß das Auflager (13) der Bramme mehrere in Querrichtung verlaufende und in Längsrichtung in einem Abstand angeordnete Elemente in Form eines Kammes aufweist, in denen in den Durchgangsbereichen der Brenner nach oben offene Nuten (14) ausgebildet sind.

16. Maschine nach einem der Ansprüche 1 bis 15, dadurch gekennzeichnet, daß sich der Schlitten (29) über einem Schacht (9) verschiebt, der mit Wasser gefüllt ist, das die Schneidbrennerschlacken aufnimmt.

17. Maschine nach einem der Ansprüche 1 bis 16, dadurch gekennzeichnet, daß das Traggerüst des Schlittens, der im Querschnitt etwa die Form eines Kastens hat, den transversalen Teil der Bank umgibt und Rollen (36) aufweist, die von Schienen (37) geführt werden, die sich im oberen Teil der Bank (16) befinden.

18. Maschine nach einem der Ansprüche 1 bis 17, dadurch gekennzeichnet, daß die zur Transla-tionsbewegung der Bank dienenden Antriebsmit-tel (26, 19) selektiv mit zwei Motoren (27, 28) koppelbar sind, die unterschiedliche Geschwindigkeiten haben.

19. Maschine nach einem der Ansprüche 1 bis 18, dadurch gekennzeichnet, daß jeder Brenner (2, 3, 4) in seiner vertikalen Stellung in einer Hülse (43) gelagert ist, die mit Platten (44, 46) verbunden ist und ein Gelenkparallelogramm auf einer Armstütze (47) des Schlittens bilden, die in einer verstellbaren Position längs des Schlittens (29) fixierbar ist.

20. Maschine nach Anspruch 19, dadurch gekennzeichnet, daß die Arbeitsposition jedes Brenners bezüglich der Bramme (A) durch ein Auflagerstück (55) bestimmt ist, das fest mit der Hülse (43) verbunden ist.

21. Maschine nach Anspruch 19 oder 20, dadurch gekennzeichnet, daß die Brenner (2, 3, 4) mit Hilfe eines Zylinders (68) hebbar sind, der auf der Bank (16) angelenkt ist und dessen beweglicher Teil (67) mit einem Ende (66) einer Querstange (63) verbunden ist, deren anderes Ende mit der Bank (16) verbunden ist, und daß diese Querstange (63) eine Rolle (62) trägt, die auf eine einen Hebelarm bildende Verlängerung (61) der oberen Platten (44) einwirkt.

FIG.1

0 018 868

# FIG.2

FIG.3

0 018 868

# FIG.4

# FIG.5